# EUROPÄISCHE PATENTSCHRIFT

(11) **EP 0 613 843 B1**
(45) Veröffentlichungstag und Bekanntmachung des Hinweises auf die Patenterteilung: **29.05.1996**
(21) Anmeldenummer: 93103258.5
(22) Anmeldetag: 02.03.1993
(51) Int. Cl.: B65G 47/50

(54) **Bandförmiges Transport- und/oder Antriebselement**
Belt-like conveyor and/or transmission element
Elément de transport et/ou de transmission en forme de bande

(43) Veröffentlichungstag der Anmeldung: 07.09.1994
(73) Patentinhaber: FORBO International S.A., CH-8193 Eglisau/Zürich (CH)
(72) Erfinder: Tope, Hans-Georg, W-3012 Langenhagen (DE); König, Burkhard, W-3057 Neustadt 1 (DE)
(74) Vertreter: Braun, Dieter, Dipl.-Ing. Patentanwälte, Hagemann & Kehl

(56) Entgegenhaltungen:
- EP-A- 0 521 245
- DE-A- 2 059 612
- FR-A- 1 575 376
- US-A- 2 869 878
- IBM TECHNICAL DISCLOSURE BULLETIN Bd. 9, Nr. 5, 5. Oktober 1966, NEW YORK US Seiten 517 - 518 R. E. SANDT 'AUTOMATIC CONVEYOR SYSTEM'

## Beschreibung

Die Erfindung bezieht sich auf ein bandförmiges Transport- und/oder Antriebselement gemaß dem Oberbegriff des Anspruchs 1.

Bei Transportbändern ist es bereits bekannt, zur Steuerung des Geradlaufs Markierungen aus einem anderen Material aufzubringen bzw. einzubetten (DE 37 11 916/C2). Die Markierungen werden hier mittels materialselektiv arbeitender Fühler einer Steuereinrichtung für den Geradlauf des Transportbandes abgetastet. Sofern derartige Markierungen abschnittweise angeordnet sind, kann außerdem erreicht werden, daß das Transportband in bestimmten Abständen angehalten oder auch nur schrittweise bewegt wird. Da derartige material-selektiv abtastbare Markierungen in das Transportband fest eingebettet sind, können diese Steuerungsvorgänge lediglich in einer fest vorgegebenen Art und Weise auslösen.

Aus der DE-AS 27 41 788 ist es auch bereits bekannt geworden, auf als Stahlbändern ausgebildeten Förderbändern, die magnetisierbar sind, Markierungen in Form von Magnetflecken aufzubringen. Die Magnetflecken beeinflussen dann am Band angeordnete Leseköpfe, die wiederum die Betätigung von Entladeschiebern auslösen. Der Einsatz von Stahlbändern ist auf spezielle Anwendungsgebiete beschränkt. Außerdem erfordert die Magnetisierung der bei Stahlbändern eingesetzten Stähle starke Magnetfelder.

Durch die DE-C 7459 X/39a ist es auch bereits bekannt geworden, z. B. an Förderbändern aus Kautschuk einen Kantenschutz vorzusehen, der insbesondere auf die Kanten in Form einer Lösung von Polymerisaten von Acrylsäureestern oder von Methacrylsäureestern oder Methacrylsäureestern, denen gegebenenfalls Füllstoffe, Pigmente und Farbstoffe zugesetzt sind, aufgetragen wird. Nach dem Verdunsten des Lösungsmittels entsteht dann ein Film, der einen Schutz z. B. gegen Wasser, Benzin, Öl und Fett bietet. Durch Zusätze können besonders erwünschte Eigenschaften des Kantenschutzes, z. B. beliebige Färbungen, erzielt werden.

In dem DE-GM 83 00 705 ist es bereits beschrieben, ein magnetisches Aufzeichnungsmedium bestehend aus einem Kunststoff-Folienträger an seiner Oberfläche mit einer Magnetschicht zu versehen, die an den Bandenden stetig abnimmt. Gemäß der hier beschriebenen Lösung soll ein weiches Ein- und Ausblenden von Magnetisierungsvorgängen erreicht werden.

Durch das DE-GM 17 38 581 ist es bekannt geworden, an Transportbändern einen Kantenschutz aus thermoplastischem Kunststoff anzubringen, der als Kunststoffprofil ausgebildet ist. Zur Verfestigung des Kantenschutzes können in dem Kunststoffprofil z. B. eine Drahtspirale aus Stahl, Kunststoff oder anderem Material angeordnet sein. Es ist weiterhin beschrieben, Materialien unterschiedlicher Festigkeitseigenschaften einzusetzen und gegebenenfalls auch Seile, Schläuche und dergleichen in den Kantenschutz einzulagern. Alle diese Maßnahmen dienen jedoch dem Schutz der Bandkante.

Aus der FR-A-1 575 376, Goodyear ist es auch bereits bekannt geworden, eine magnetisierbare Schicht in ein Transportband zu integrieren. Die hier offenbarten Transportbänder werden jedoch stets schon bei ihrer Herstellung mit den magnetisierbaren Bereichen versehen. Um die hier von eingelagerten zerkleinerten Drahtstücken gebildete magnetisierbare Schicht 11 zu schützen und ein Freilegen zu verhindern, ist diese stets wenigstens an ihren seitlichen Kanten von zusätzlich angeordneten Gummistreifen 19 eingefaßt. Die Einlagerung von zerkleinerten Drähten weist zudem u. a. den Nachteil auf, daß es bei der Einlagerung in den Mengen, die für eine ausreichende Magnetisierbarkeit erforderlich sind, zu punktuellen Anhäufungen der Drähte kommt. Diese sind zwar möglicherweise in dicken Gummischichten für die mechanische Festigkeit ohne große Bedeutung, würden aber in Strängen aus einem thermoplastischen Kunststoff die Bindung erheblich stören und deren Festigkeit stark beeinträchtigen. Die Materialanhäufungen stellen in dem Trägermaterial Fremdkörper dar, in deren Bereich das eingelagerte Material nur sehr unvollständig mit dem Trägermaterial benetzt und nur lose in dieses eingebunden ist. Zudem weisen die zerkleinerten Drähte eine relativ hohe Eigensteifigkeit auf, so daß es insbesondere auch aufgrund der im Bereich der Umlenkungen des Transportbandes auftretenden Verformungen des Trägermaterials sehr schnell zu einer weiteren Lockerung der Struktur kommt.

Die EP-A-521 245 befaßt sich lediglich mit der Anbringung eines Kantenschutzes an Transportbändern, wobei die Problematik eines ferromagnetisches Material enthaltenden Kunststoffstranges nicht angesprochen ist.

Der Erfindung liegt die Aufgabe zugrunde, ein bandförmiges Transport- und/oder Antriebselement, das wiederholt mit einer magnetischen Information ausgestattet ist, zu schaffen, welches kostengünstig herzustellen und problemlos mit jederzeit veränderlichen Informationen auszustatten ist.

Diese Aufgabe wird erfindungsgemäß durch die Merkmale des Anspruchs 1 gelöst. Die weitere Ausgestaltung der Erfindung ist den Unteransprüchen zu entnehmen.

Wie es sich gezeigt hat, ist es bei einer Einbettung der aus einem ferromagnetischen Material bestehenden Komponente in einen strangförmigen elastischen Kunststoffträger möglich, diese Komponente an einem Transport- und/oder Antriebselement entsprechend der jeweiligen Anforderungen auch nachträglich durch Verschweißen oder Verkleben dauerhaft zu befestigen. Die Komponente kann dabei grundsätzlich an einer beliebigen, gut abtastbaren Zone des Transport- und/oder Antriebselementes befestigt werden, ohne daß dessen eigentliche Transport- und/oder Antriebsfunktion beeinträchtigt wird. Aus der Einbettung in den Kunststoffträger ergibt sich der Vorteil, daß die zu verbindenden Materialien so aufeinander abgestimmt werden können, daß eine äußerst strapazierfähige und dauerhafte Befestigung erzielbar ist.

Ein weiterer Vorteil ergibt sich daraus, daß es sich gezeigt hat, daß das elastische Profilmaterial in seinen Eigenschaften so abgestimmt werden kann, daß die eingebettete ferromagnetische Komponente gegen mechanischen Verschleiß geschützt ist und, daß seine elastischen Eigenschaften ein Zerreißen bzw. ein Ablösen aufgrund der auftretenden Spannungen verhindern. Auch ermöglicht die Anordnung in einem Kunststoffträger eine exakte Positionierung der ferromagnetischen Komponente, die für eine funktionssichere Magnetisierung und Abtastung durch Magnetköpfe erforderlich ist. Die Auswahl der ferromagnetischen Komponente kann ausschließlich unter dem Gesichtspunkt einer optimalen Signaleingabe bzw. Signalerkennung erfolgen. Der Kunststoffträger stellt die geforderten mechanischen Eigenschaften sicher.

Sofern die als Markierung zur Auslösung von Steuerungsvorgängen einsetzbare Komponente aus ferromagnetischem Material in einen Kunststoffträger aus einem thermoplastischen Kunststoff eingebettet ist, kann die Komponente durch Verschweißen, besonders dauerhaft am Transportband befestigt werden. Diese gilt insbesondere dann, wenn auch das Transport- und/oder Antriebselement wenigstens teilweise aus einem thermoplastischen Kunststoff besteht. In diesem Fall läßt sich eine besonders gute, strapazierfähige Schweißverbindung herstellen. Die Komponente kann grundsätzlich an einer beliebigen, gut abtastbaren Stelle des Transport- und/oder Antriebselementes befestigt werden, sofern dabei dessen Transport-und/oder Antriebsfunktion nicht beeinträchtigt wird.

Auf die aus einem gut magnetisierbaren ferromagnetischen Material bestehende Komponente sind durch Magnetisierung vorzugsweise auch digitale Steuerbefehle aufbringbar. Die magnetischen Markierungen sind mittels am Transport- und/oder Antriebselement angeordneter Abtastköpfe lesbar und erzeugen ein Signal, das einen Steuerungsvorgang auslöst. Die Markierungen können beliebig oft gelöscht und neu aufgebracht werden.

Bei dem in den Kunststoffträger eingebetteten ferromagnetischen Material handelt es sich vorzugsweise um Material aus Eisenteilchen bzw. um Teilchen einer Eisenlegierung, um Eisenoxid, Chromdioxid oder andere ferromagnetische Oxide.

Die bandförmigen Transport- und/oder Antriebselemente sind beispielsweise als Transportband. bzw. als Zahnriemen ausgebildet. Der strangförmige, elastische Kunststoffträger kann beispielsweise als Flachband ausgebildet sein und wird dann vorzugsweise mit der Transportseite des Transportbandes bzw. mit der Außenseite des Zahnriemens verschweißt bzw. dort durch Kleben befestigt. Insbesondere beim Verschweißen paßt sich das Flachband bei entsprechender Gestaltung der Oberfläche derart an, daß die Transporteigenschaften in keiner Weise beeinträchtigt werden. Das Flachband kann aber durchaus auch an einer Seitenkante des Transportbandes bzw. des Zahnriemens angeschweißt bzw. aufgeklebt werden.

Gemäß einer Ausführungsform der Erfindung ist der Kunststoffträger als Rundschnur ausgebildet. Sofern die Rundschnur einen Durchmesser aufweist, der der Gesamtdicke z. B. eines Transportbandes entspricht, kann die Rundschnur auf eine Schnittkante des Transportbandes aufgeschweißt werden, wobei sich während des Verschweißens die an der Schnittkante anliegende Seite der Rundschnur an die Form der Schnittkante anpaßt und diese abdeckend sich vollflächig mit dem Transportband verbindet. Es wird so erreicht, daß die Transport- bzw. Auflageflächen des Transportbandes in ihrer Form bzw. in ihren Eigenschaften nicht beeinträchtigt werden und andererseits die Schnittkante durch die aufgebrachte Rundschnur gleichzeitig versiegelt wird. Außerdem wird eine exakte Positionierung der Markierung, d. h. deren exakte Zuordnung zu den in diesem Fall an der Außenkante des Transportbandes angeordneten Magnetisier- bzw. Abtastköpfen der Steuereinrichtung erreicht.

Es ist bei einer seitlichen Anordnung des Kunststoffträgers besonders einfach, daß die Magnetisier-bzw. Abtastköpfe ständig an der Außenkante, d. h. an dem die ferromagnetische Komponente enthaltenden Flachband bzw. der Rundschnur anliegen und dabei allen Querbewegungen der Außenkante folgen, so daß die Magnetisierung und Abtastung unter ständiger Berührung, d. h. unter optimalen, konstanten Bedingungen erfolgen. Es ist somit eine sehr hohe Funktionssicherheit erzielbar. Die im Bereich der Außenkante des Transportbandes angeordneten Magnetisier- bzw. Abtastköpfe beeinträchtigen darüber hinaus in keiner Weise die Transport- bzw. Antriebsfunktion. Die Transportflächen bleiben frei und es werden somit auch Verschmutzungen der Magnetisier- bzw. Abtastköpfe weitgehend vermieden.

Sofern die Schnittkanten, z. B. eines Transportbandes vor dem Aufschweißen der Rundschnur abgeschrägt sind, ergibt sich eine vergrößerte Kontaktfläche für die Rundschnur und somit eine mechanisch besonders stark belastbare Verbindung.

Vorzugsweise hat der Kunststoffträger einen niedrigeren Schmelzpunkt als der thermoplastische Kunststoff des Transport- und/oder Antriebselementes. Sofern der Kunststoff des Transportbandes einen Schmelzpunkt von etwa 155 °C aufweist, so liegt der Schmelzpunkt des aufgeschweißten Kunststoffträgers vorzugsweise bei etwa 145 °C. Dabei ist es vorteilhaft, wenn der Kunststoffträger und das Transportband aus gleichem thermoplastischen Kunststoffen mit unterschiedlichen Schmelzpunkten bestehen. Hierbei kann es sich beispielsweise um Polyurethane handeln. Insbesondere, sofern der Kunststoffträger auf einem Transport und/oder Antriebselement aus PVC befestigt werden soll, ist es vorteilhaft, auch den Kunststoffträger aus PVC herzustellen.

Der Kunststoffträger wird auf das bandförmige Transport- und/oder Antriebselement aufgebracht, indem beide unter Erwärmung auf die Schmelztemperatur in einer Schweißvorrichtung fortlaufend zusammengeführt und verschweißt werden. Dabei wird das einen höheren Schmelzpunkt aufweisende Transport- und/oder Antriebselement nur soweit erwärmt, daß es hier auch im Bereich der Kontaktflächen im wesentlichen zu keiner Verformung kommt. Der einen niedrigeren Schmelzpunkt aufweisende Kunststoffträger wird gleichzeitig soweit erwärmt, daß seine an dem Transportband anliegende Seite sich während des Verschweißens an das Transportband anpaßt und sich vollflächig mit diesem verbindet. Insbesondere kommt es auch an den Kanten eines Flachbandes zu einem völligen Verschweißen ohne Übergang, d. h. ohne, daß eine Kante entsteht. Auch kann eine völlige Abdeckung einer Schnittkante eines Transportbandes erreicht werden.

Aus diesem Verfahren ergibt sich der weitere Vorteil, daß Transport- und/oder Antriebselement wie Transportbänder oder Zahnriemen in endlicher oder auch in endloser Form jederzeit, sofern es die Einsatzbedingungen zweckmäßig erscheinen lassen, mit einer als Markierung zur Auslösung von Steuerungsvorgängen einsetzbaren Komponente versehen werden können.

Das mittels herkömmlicher Verfahren hergestellte Transport- und/oder Antriebselement kann völlig unabhängig von seiner Länge und seiner Breite sehr schnell mit dem die codierbare Komponente enthaltenden Kunststoffträger versehen werden. Eine gesonderte Lagerhaltung der Elemente ist nicht erforderlich. Gegebenenfalls können diese auch problemlos am Einsatzort mit der codierbaren Komponente versehen werden.

Grundsätzlich ist es aufgrund der Anordnung der magnetisierbaren Komponente in einem strangförmigen, elastischen Kunststoffträger möglich, Transport- und/oder Antriebselemente, die auf Kunststoffbasis bzw. aus Elastomeren hergestellt sind, mit einer Markierung zur Auslösung von Steuerungsvorgängen zu versehen. Dies ermöglicht beispielsweise bei Transportbändern die Eingabe von Steuerbefehlen zur Lenkung des Materialflusses. Bei Antriebselementen, wie beispielsweise Zahnriemen ist es möglich, durch die Eingabe von lesbaren Signalen diesem zusätzlich zur Antriebsfunktion eine Steuerfunktion zu geben. Diese zusätzliche Steuerfunktion ermöglicht beispielsweise die Positionierung der angetriebenen Maschinenelemente. Die am Zahnriemen zusätzlich angeordnete magnetisierbare Komponente ermöglicht exakte Stellbewegungen des Zahnriemens, ohne, daß ein Schrittmotor mit seiner aufwendigen Steuerung eingesetzt werden muß. Gegebenenfalls können auch mechanisch aufwendige Spindelantriebe ersetzt werden.

Die Erfindung wird nachfolgend anhand von in der Zeichnung dargestellten Ausführungsbeispielen näher erläutert. Es zeigen:
Figur 1 ein Transportband, an dessen Schnittkante eine Rundschnur befestigt ist, in die ein ferromagnetisches Material eingebettet ist,
Figur 2 einen Querschnitt durch ein Transportband, an dessen Schnittkante eine Rundschnur befestigt ist, deren Außenkante winklig verformt ist,
Figur 3 einen Querschnitt durch ein Transportband, auf dessen Transportseite ein Flachband befestigt ist, in das ferromagnetisches Material eingelagert ist,
Figur 4 ein Transportband in der Draufsicht als Teil einer Paketverteilvorrichtung,
Figur 5 einen Zahnriemen als Teil eines Linearantriebes.

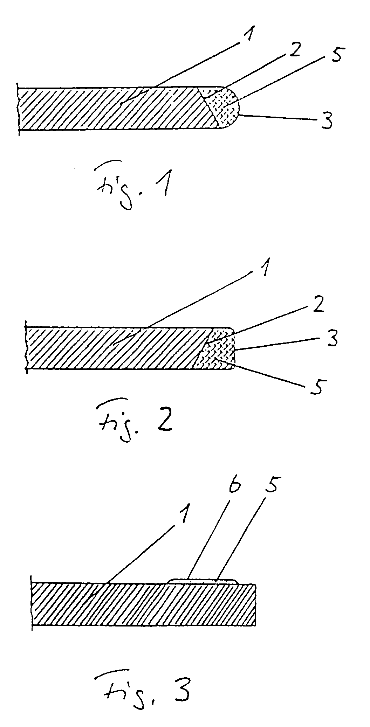

In der Figur 1 der Zeichnung ist mit 1 ein Transportband bezeichnet, auf dessen eine Schnittkante 2 eine Rundschnur 3 aufgeschweißt ist. Die Schnittkante 2 ist schräg geschnitten, so daß sich die Kontaktfläche mit der Rundschnur 3 vergrößert und die Festigkeit der Schweißverbindung erhöht wird. Die Rundschnur 3 besteht aus einem thermoplastischen Kunststoff, in den als Markierung zur Auslösung von Steuerungsvorgängen einsetzbare Komponente ein ferromagnetischer Füllstoff 5 eingebettet ist. Der ferromagnetische Füllstoff 5 besteht aus Eisenteilchen bzw. aus Teilchen einer Eisenlegierung, aus Eisenoxid, Chromdioxid oder anderen ferromagnetischen Oxiden.

Da sowohl das Transportband 1 als auch die Rundschnur 3 aus thermoplastischem Kunststoff bestehen, ist mittels einer in der Zeichnung nicht dargestellten Schweißvorrichtung eine Schweißverbindung hoher Festigkeit herstellbar. Sofern der thermoplastische Kunststoff der Rundschnur 3 einen niedrigeren Schmelzpunkt hat, kann während des Schweißvorganges eine Verformung der Rundschnur 3 erreicht werden. Die Rundschnur 3 paßt sich dann der Form der Schnittkante an, ohne daß das Transportband 1 an sich verformt wird. Die Lauf- und Transporteigenschaften des Transportbandes 1 bleiben dann voll erhalten. Als zusätzlicher Effekt wird eine vorteilhafte Versiegelung der Schnittkante 2 des Transportbandes 1 erreicht.

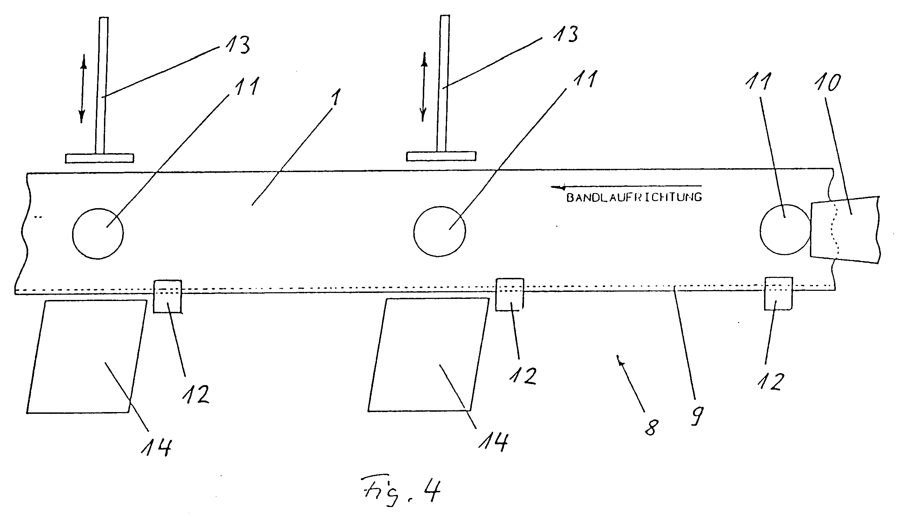

Aus der Figur 2 der Zeichnung ist ersichtlich, daß die auf die Schnittkante 2 des Transportbandes 1 geschweißte Rundschnur 3 durchaus auch derart verformt werden kann, so daß sich eine winklige Außenkante ergibt. Eine derartige Außenkante kann die Präzision der Magnetisierung und die Abtastung durch die Magnetköpfe einer Steuereinrichtung verbessern.

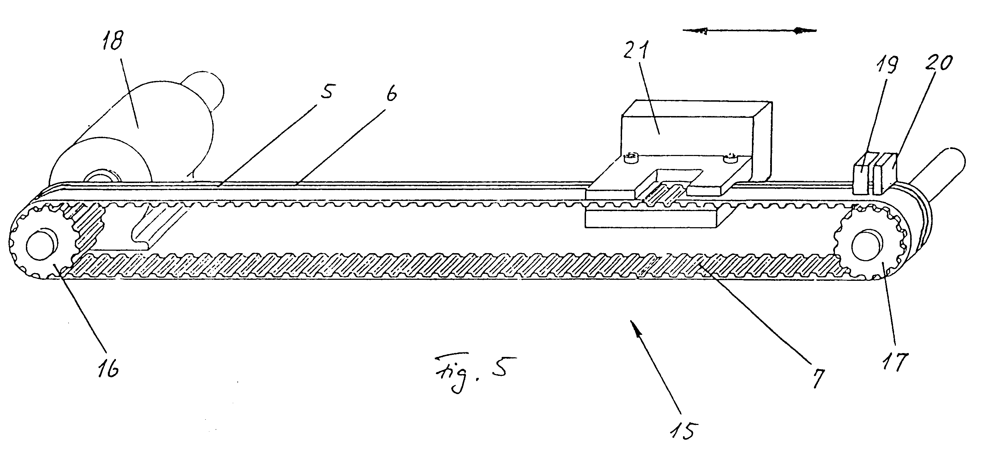

Bei dem in der Figur 3 dargestellten Transportband 1 ist auf dessen Transportseite ein Flachband 6 befestigt, in das als Markierung zur Auslösung von Steuerungsvorgängen einsetzbare Komponente ein ferromagnetisches Material 5 eingelagert ist. Vorzugsweise besteht das Flachband 6 aus einem thermoplastischen Kunststoff und ist mit dem Transportband 1 verschweißt. Gegebenenfalls ist aber insbesondere bei dieser Ausführungsform durchaus auch ein Verkleben möglich.

Die Anordnung eines Flachbandes 6 gemäß dem in der Figur 3 dargestellten Ausführungsbeispiel ist insbesondere auch für Antriebsbänder, wie beispielsweise Zahnriemen 7 geeignet. Ein derartiger Zahnriemen 7 ist in der Figur 5 der Zeichnung dargestellt. Die Anordnung des Flachbandes 6 ist hier an der Außenseite des Zahnriemens 7 vorteilhaft, da dort bei einem Einsatz als Antriebselement kein Materialtransport erfolgt. Andererseits ist die Erfindung selbstverständlich auch bei den als Transportelement eingesetzten Zahnriemen 7 sehr vorteilhaft einsetzbar.

Vorzugsweise werden das Transportband 1 bzw. der Zahnriemen 7 zum Anbringen der Rundschnur 3 bzw. des Flachbandes 6 einer in der Zeichnung nicht dargestellten Schweißvorrichtung in endlicher oder endloser Form zugeführt. Gleichzeitig werden die Rundschnur 3 bzw. das Flachband 6 von einer Vorratsrolle zugeführt, wobei beispielsweise mittels einer Warmluftdüse das zugeführte Material erwärmt und mit dem Transportband 1 bzw. den Zahnriemen 7 verschweißt wird. Eine besonders schonende Behandlung des Transportbandes 1 bzw. der Zahnriemen 7 wird dann erreicht, wenn der aufzuschweißende strangförmige Kunststoffträger einen niedrigeren Schmelzpunkt aufweist als das Material des Transportbandes 1 bzw. des Zahnriemens 7. Die Schweißtemperatur wird dann so gewählt, daß das Material des Transportbandes 1 bzw. des Zahnriemens 7 lediglich angeschmolzen, daß Material des strangförmigen Kunststoffträgers jedoch verformbar wird und sich der Oberfläche bzw. der Form der Schnittkante 2 des Transport- und/oder Antriebselementes 1 anpaßt und sich mit der Oberfläche bzw. Schnittkante 2 innig verbindet.

In der Figur 4 der Zeichnung ist eine Paketverteilvorrichtung 8 dargestellt, wobei das Transportband 1 in der Draufsicht sichtbar ist. Das Transportband 1 weist eine Signalspur 9 auf, die von dem im strangförmigen, elastischen Kunststoffträger eingelagerten ferromagnetischen Füllstoff 5 gebildet ist. Mittels einer Aufgaberutsche 10 werden Pakete 11 auf das Transportband 1 aufgegeben. Gleichzeitig wird mittels eines an der Signalspur 9 angeordneten Magnetkopfes 12 der Paketverteilvorrichtung 8 eine Markierung auf die Signalspur 9 aufgebracht.

Sobald die auf die Signalspur 9 aufgebrachte Markierung weitere Magnetköpfe 12 passiert, wird das aufgebrachte Signal ausgelesen und verarbeitet. Bei entsprechender Information erfolgt der Abwurf des Paketes 11 durch einen Schieber 13 auf eine Abwurfrutsche 14. Die erfindungsgemäße Gestaltung des Transportbandes 1 ermöglicht es, individuelle, auch digitale Signale aufzubringen, über die bestimmte, dem jeweiligen Transportgut exakt zugeordnete Vorgänge ausgelöst werden können.

In der Figur 5 der Zeichnung ist ein Linearantrieb 15 dargestellt, in dem ein Zahnriemen 7 als Antriebselement angeordnet ist. Der Zahnriemen 7 ist beidseitig über je eine Zahnscheibe 16 und 17 geführt und umgelenkt. Ein Antriebsmotor 18 treibt in Abhängigkeit von Steuerbefehlen einer in der Zeichnung nicht dargestellten Steuereinrichtung die Zahnscheibe 16 und damit den Zahnriemen 7 an. Auf die Außenseite des Zahnriemens 7 ist das ein ferromagnetisches Material 5 enthaltende Flachband 6 aufgeschweißt. Das Flachband 6 stellt eine Steuerspur dar, die mittels am Zahnriemen 7 angeordneter Magnetköpfe 19 und 20 magnetisiert bzw. gelesen werden kann. Auf dem Zahnriemen 7 ist ein linearbewegbares Anschlußstück 21 befestigt. An dem Anschlußstück 21 des Linearantriebs 15 können wahlweise z. B. Greifer, Sauger, Dosierköpfe, etc., befestigt werden. Ein derartig gestalteter Linearantrieb 15 weist den Vorteil auf, daß die Linearbewegungen von den magnetischen Markierungen auf dem Flachband 6 vorgegeben werden. Dabei können die magnetischen Markierungen sehr einfach und schnell den jeweiligen Erfordernissen angepaßt werden. Insbesondere erübrigt sich der Einsatz eines aufwendigen Schrittmotors, da die erforderlichen Arbeitswege von den magnetischen Markierungen direkt vorgegeben werden. Eine Schrittsteuereinrichtung ist folglich nicht erforderlich.

Der Zahnriemen 7 kann im übrigen auch als endlicher Zahnriemen 7 ausgebildet sein, dessen Enden auf einen Grundkörper fest verspannt sind. In diesem Fall bewegt sich das Anschlußstück auf dem Zahnriemen 7 und die Magnetköpfe befinden sich an dem Anschlußstück. Es versteht sich, daß der erfindungsgemäße strangförmige, elastische Kunststoffträger für das ferromagnetische Material 5 an allen Arten von Transport- und/oder Antriebselementen angeordnet sein kann, sofern die Materialeigenschaften eine sichere Befestigung zulassen. Die Anordnung des ferromagnetischen Materials 5 in einem Kunststoffträger ermöglicht es im übrigen, dessen Materialeigenschaften hinsichtlich der Elastizität und Abriebfestigkeit an die jeweiligen Erfordernisse anzupassen. Es kann somit auch insbesondere den in den bandförmigen Transport- und/oder Antriebselementen, insbesondere an den Umlenkungen auftretenden hohen mechanischen Beanspruchungen, Rechnung getragen werden.

## Patentansprüche

1. Bandförmiges Transport- und/oder Antriebselement (1), mit einem ferromagnetischen Material (5), das durch Magnetisierung aufzubringende Informationen enthält, **dadurch gekennzeichnet,** daß das ferromagnetische Material (5) als Füllstoff in einen strangförmigen, aus einem elastischen, thermoplastischen Kunststoff bestehenden Träger (3, 6) eingebettet ist, der mit dem Transport- und/oder Antriebselement (1) verschweißt oder verklebt ist und aus Teilchen aus Eisen oder einer Eisenlegierung oder Eisenoxid oder Chromdioxid oder ferromagnetischen Oxiden besteht.

2. Bandförmiges Transport- und/oder Antriebselement (1) nach Anspruch 1, dadurch gekennzeichnet, daß der strangförmige Träger ein Flachband (6) oder eine Rundschnur (3) ist.

3. Bandförmiges Transport- und/oder Antriebselement (1) nach den Ansprüchen 1 und 2, dadurch gekennzeichnet, daß der thermoplastische Kunststoff des Trägers (3, 6) einen niedrigeren Schmelzpunkt hat als der thermoplastische Kunststoff des Transport- und/oder Antriebselementes (1), das insbesondere als Zahnriemen (7) ausgebildet ist.

4. Bandförmiges Transport- und/oder Antriebselement (1) nach den Ansprüchen 1 oder 3, dadurch gekennzeichnet, daß der strangförmige Träger und das Transport- und/oder Antriebselement (1) aus gleichem Material bestehen.

5. Bandförmiges Transport- und/oder Antriebselement (1) nach den Ansprüchen 1 bis 4, dadurch gekennzeichnet, daß der Schmelzpunkt des Transport- und/oder Antriebselementes (1) 155 °C und der des strangförmigen Kunststoffs 145 °C beträgt.

6. Bandförmiges Transport- und/oder Antriebselement (1) nach einem oder mehreren der Ansprüche 1 bis 4, dadurch gekennzeichnet, daß der strangförmige Träger aus PVC mit einem Schmelzpunkt von 120 °C besteht.

7. Bandförmiges Transport- und/oder Antriebselement (1) nach einem oder mehreren der Ansprüche 1 bis 6, dadurch gekennzeichnet, daß die Schnittkanten (2) des Transport- und/oder Antriebselementes (1) zur Vergrößerung der Kontaktfläche abgeschrägt sind.

8. Bandförmiges Transport- und/oder Antriebselement (1) nach einem oder mehreren der Ansprüche 1 bis 7, dadurch gekennzeichnet, daß der Durchmesser der Rundschnur (3) der Gesamtdicke des Transport- und/oder Antriebselementes (1) entspricht.

9. Bandförmiges Transport- und/oder Antriebselement (1) nach einem oder mehreren der Ansprüche 1 bis 8, dadurch gekennzeichnet, daß die Rundschnur (3) nach dem Verschweißen die Schnittkante (2) vollflächig abdeckt.

10. Bandförmiges Transport- und/oder Antriebselement (1) nach einem oder mehreren der Ansprüche 1 bis 9, dadurch gekennzeichnet, daß die Kontaktflache des Transport- und/oder Antriebselementes (1) beim Verschweißen oder Verkleben nicht verformt wird.

## Claims

1. A belt-like conveying and/or driving element (1) with a ferromagnetic material (5), which contains information to be applied by magnetisation, **characterised in that** the ferromagnetic material (5) is embedded as a filler in a strand-like carrier (3, 6) comprising an elastic, thermoplastics material and which is welded or bonded to the conveying and/or driving element (1) and is made from particles of iron, or an iron alloy, or iron oxide, or chromium dioxide, or ferromagnetic oxides.

2. A belt-like conveying and/or driving element (1) according to Claim 1, characterised in that the strand-like carrier is a flat belt (6) or a round cord (3).

3. A belt-like conveying and/or driving element (1) according to Claim 1 and Claim 2, characterised in that the thermoplastics material of the carrier (3, 6) has a lower melting point than the thermoplastics material of the conveying and/or driving element (1), which is especially constructed as a toothed belt (7).

4. A belt-like conveying and/or driving element (1) according to Claims 1 or 3, characterised in that the strand-like carrier and the conveying and/or driving element (1) are made from the same material.

5. A belt-like conveying and/or driving element (1) according to Claims 1 to 4, characterised in that the melting point of the conveying and/or driving element (1) is 155°C and that of the strand-like plastics material is 145°C.

6. A belt-like conveying and/or driving element (1) according to any one or more of Claims 1 to 4, characterised in that the strand-like carrier is made from PVC with smelting point of 120°C.

7. A belt-like conveying and/or driving element (1) according to any one or more of Claims 1 to 6, characterised in that the cut edges (2) of the conveying and/or driving element (1) are bevelled for enlarging the contact face.

8. A belt-like conveying and/or driving element (1) according to any one or more of Claims 1 to 7, characterised in that the diameter of the round cord (3) corresponds to the total thickness of the conveying and/or driving element (1).

9. A belt-like conveying and/or driving element (1) according to any one or more of Claims 1 to 8, characterised in that the round cord (3) completely covers the cut edge (2) following welding.

10. A belt-like conveying and/or driving element (1) according to any one or more of Claims 1 to 9, characterised in that the contact face of the conveying and/or driving element (1) is not deformed during welding or bonding.

## Revendications

1. Elément de transport et/ou d'entraînement (1) en forme de bande, avec une matière ferromagnétique (5), qui contient des informations mises par magnétisation, élément de transport et/ou d'entraînement en forme de bande caractérisé en ce que la matière ferromagnétique (5) est incorporée comme matière de remplissage dans un support (3, 6) en forme de brin, consistant en une matière thermoplastique, élastique, ce support étant soudé ou collé à l'élément de transport et/ou d'entraînement (1) et consistant en particules de fer ou d'un alliage à base de fer ou en oxyde de fer ou dioxyde de chrome ou en des oxydes ferromagnétiques.

2. Elément de transport et/ou d;entraînement (1) en forme de bande, selon la revendication 1, caractérisée en ce que le support en forme de brin est une bande plate (6) ou un cordon arrondi (3).

3. Elément de transport et/ou d'entraînement (1), en forme de bande, selon les revendications 1 et 2, caractérisé en ce que la matière thermoplastique du support (3, 6) a un point de fusion plus bas que la matière thermoplastique de l'élément de transport et/ou d'entraînement (1), qui est constitué en particulier sous la forme d'une courroie crantée (7).

4. Elément de transport et/ou d'entraînement (1), en forme de bande, selon les revendications 1 ou 3, caractérisé en ce que le support en forme de brin et l'élément de transport et/ou d'entraînement (1) sont réalisés dans la même matière.

5. Elément de transport et/ou d'entraînement (1), en forme de bande, selon les revendications 1 à 4, caractérisé en ce que le point de fusion de l'élément de transport et/ou d'entraînement (1) atteint 155° C et celui de la matière plastique en forme de brin 145° C.

6. Elément de transport et/ou d'entraînement (1), en forme de bande, selon une ou plusieurs des revendications 1 à 4, caractérisé en ce que le support en forme de brin est réalisé en PVC avec un point de fusion de 120° C.

7. Elément de transport et/ou d'entraînement (1), en forme de bande, selon une ou plusieurs de revendications 1 à 6, caractérisé en ce que les arêtes de coupe (2) de l'élément de transport et/ou d'entraînement (1) sont chanfreinées pour augmenter la surface de contact.

8. Elément de transport et/ou d'entraînement (1), en forme de bande, selon une ou plusieurs des revendications 1 à 7, caractérisé en ce que le diamètre du cordon arrondi (3) correspond à l'épaisseur totale de l'élément de transport et/ou d\entraînement (1).

9. Elément de transport et/ou d'entraînement (1), en forme de bande, selon une ou plusieurs des revendications 1 à 8, caractérisé en ce que le cordon arrondi (3) recouvre l'arête de coupe (2) sur toute la surface après le soudage.

10. Elément de transport et/ou d'entraînement (1), en forme de bande, selon une ou plusieurs des revendications 1 à 9, caractérise en ce que la surface de contact de l'élément de transport et/ou d'entraînement (1) n'est pas déformée lors du soudage ou du collage.
